# EUROPÄISCHE PATENTSCHRIFT

(11) **EP 2 867 762 B1**
(45) Veröffentlichungstag und Bekanntmachung des Hinweises auf die Patenterteilung: **27.10.2021**
(21) Anmeldenummer: 13734015.4
(22) Anmeldetag: 27.06.2013
(51) Int. Cl.: G06F 3/0488

(54) **VERFAHREN ZUM EMPFANGEN EINER EINGABE AUF EINEM BERÜHRUNGSEMPFINDLICHEN FELD**
METHOD FOR RECEIVING AN INPUT ON A TOUCH-SENSITIVE PANEL
PROCÉDÉ PERMETTANT DE RECEVOIR UNE ENTRÉE SUR UN CHAMP TACTILE

(30) Priorität: 28.06.2012 DE 102012211163
(43) Veröffentlichungstag der Anmeldung: 06.05.2015
(73) Patentinhaber: Bayerische Motoren Werke Aktiengesellschaft, 80809 München (DE)
(72) Erfinder: RÖLLE, Christopher, 81541 München (DE); RÜMELIN, Sonja, 80687 München (DE)
(86) Internationale Anmeldenummer: PCT/EP2013/063524
(87) Internationale Veröffentlichungsnummer: WO 2014/001460

(56) Entgegenhaltungen:
- EP-A2- 1 014 295
- EP-A2- 1 103 883
- US-A1- 2009 160 813
- US-A1- 2009 273 563
- ALEXANDER MERTENS ET AL: "Design pattern TRABING", PROCEEDINGS OF THE 2ND ACM SIGCHI SYMPOSIUM ON ENGINEERING INTERACTIVE COMPUTING SYSTEMS, EICS '10, 1. Januar 2010 (2010-01-01), Seite 267, XP055051992, New York, New York, USA DOI: 10.1145/1822018.1822060 ISBN: 978-1-45-030083-4

## Beschreibung

### Feld

Die vorliegende Erfindung betrifft Verfahren zum Empfangen einer Eingabe auf einem berührungsempfindlichen Feld und eine Vorrichtung zu demselben Zweck.

Für Personenkraftwagen (PKW) sind heutzutage einheitlich flache berührungsempfindliche Felder bekannt, die in unterschiedliche Bereiche aufgeteilt sind, gegebenenfalls sind diese Bereiche beschriftet. Die Berührung eines Bereichs aktiviert eine diesem Bereich zugeordnete Funktion, beispielsweise das Initiieren eines Anrufs, das Starten des Navigationssystems oder das Aufrufen eines Funktionsmenüs.

Diese Systeme des Standes der Technik haben den Nachteil, dass sie nicht bedient werden können, ohne den Blick auf das berührungsempfindliche Feld zu richten. Der Fahrer eines PKW muss hierzu den Blick von der Straße wenden, was ein erhöhtes Unfallrisiko birgt.

Dokument US 2009/0273563 A1 offenbart Touch Screens und entsprechende Verfahren zur Anwendung im Fahrzeug. Die Touch Screens weisen ertastbare längliche Elemente auf, deren Berührung die Einstellung von Funktionen bedingt. Zur Temperatureinstellung im Fahrzeug beispielsweise bewegt der Benutzer seinen Finger entlang der länglichen Erhebung.

Dokument US 2009/0160813 A1 offenbart ein luftgestütztes System zum Bereitstellen von ertastbaren Luftkissen auf Touch Screens.

Aufgabe der Erfindung ist es, ein Verfahren zum Empfangen einer Eingabe auf einem berührungsempfindlichen Feld bereit zu stellen, bei dem der Blick nicht auf das berührungsempfindliche Feld gerichtet werden muss, um eine bestimmte Funktion zu aktivieren. Die Aufgabe wird entsprechend der Ansprüche 1-13 gelöst.

In einem Verfahren zum Empfangen einer Eingabe auf einem berührungsempfindlichen Feld, ist das Feld dazu eingerichtet, den Ort einer Berührung des Feldes durch einen Finger eines Benutzers zu bestimmen, wobei das berührungsempfindliche Feld eine ertastbare Schwelle umfasst, wobei die Schwelle so angeordnet ist, dass auf ihren beiden Seiten je zumindest ein Bereich des berührungsempfindlichen Feldes liegt. Das Verfahren umfasst: Erfassen einer die Schwelle überquerenden Bewegung des Fingers des Benutzers auf dem berührungsempfindlichen Feld; Aktivieren einer Funktion in Antwort auf das Erfassen.

Gemäß dem Verfahren wird dem Benutzer eine Schwelle auf dem berührungsempfindlichen Feld geboten, die er ertasten kann. Diese Schwelle kann der Benutzer durch Ertasten identifizieren, ohne den Blick von der Straße wenden zu müssen. Die Eingabe für das berührungsempfindliche Feld geschieht dann in Bezug auf die ertastete Schwelle, nämlich durch ein Überqueren der Schwelle mit dem Finger. Auch hierzu muss der Blick nicht von der Straße abgewendet werden. Durch das Überqueren der Schwelle aktiviert der Benutzer die Funktion. Das Verfahren bietet ähnliche Vorteile wie ein typischer abgesetzter oder hervorstehender mechanischer Knopf in einem PKW, der aufgrund der Haptik ohne Sichtkontakt identifiziert und aktiviert werden kann. Ein typisches Beispiel für einen solchen Knopf sind vorkonfigurierte Stationstasten an einem traditionellen Autoradio, bei dem vorkonfigurierte Stationstasten blind ertastet und ausgewählt werden können. Das Verfahren kann helfen Favoritenfunktionen oder -informationen schnell und ohne Blickkontakt zugänglich zu machen. Das Überqueren der Schwelle wird von einigen als Analogie zum Drücken einer Taste oder dem Klicken mit einer Maus gesehen.

Das berührungsempfindliche Feld kann auf optischer, resistiver, oder kapazitiver Erkennung der Berührung beruhen, oder auf akustischen Oberflächenwellen beruhen und wird oftmals Touch Pad genannt. Das berührungsempfindliche Feld kann die berührungsempfindliche Schicht eines berührungsempfindlichen Bildschirms (oft auch Touch Screen genannt) umfassen und auf dieser Technik beruhen. Das berührungsempfindliche Feld kann eine im Wesentlichen ebene oder gebogene Oberfläche aufweisen. Das berührungsempfindliche Feld kann durch einen Touch Screen realisiert werden.

Die ertastbare Schwelle kann durch verschiedene Vorrichtungen bereitgestellt werden. Dies können tatsächliche physikalische auf dem berührungsempfindlichen Feld aufgebrachte Strukturen aus Acryl, Silikon oder Gummi sein, die über das berührungsempfindliche Feld hinausstehen können. Die ertastbare Schwelle kann aber auch durch eine Vorrichtung bereitgestellt werden, die mithilfe von elektronischen Ladungen einen für den Benutzer wahrnehmbaren Widerstand erzeugt, der den Eindruck einer Schwelle beim Benutzer hervorruft. Vorrichtungen dieser Art werden beipsielsweise von der Firma Senseg, Espoo, Finnland als "Senseg Tixel" angeboten. Die ertastbare Schwelle kann auch als haptische Barriere bezeichnet werden und kann dem Benutzer eine Führung der Finger bzw. Hand beim blinden Ertasten ermöglichen.

Die aktivierte Funktion kann eine Funktion sein, die für den Benutzer nicht direkt wahrnehmbar ist, wie eine interne Funktion, wie zum Beispiel die Ausgabe eines Signals, dass die Schwelle überquert wurde. Andererseits kann die Funktion für den Benutzer wahrnehmbar sein, wie zum Beispiel das Aufrufen eines Programms, des Navigationssystems, das Initiieren eines Telefonanrufes, das Starten einer App.

Die überquerende Bewegung kann eine Berührung des Fingers des Benutzers zuerst ausschließlich oder im Wesentlichen ausschließlich in einem Bereich des Feldes auf einer Seite der Schwelle und anschließend ausschließlich oder im Wesentlichen ausschließlich in einem Bereich des Feldes auf der anderen Seite der Schwelle umfassen. Es kann vorgesehen sein, dass nur die Überquerung der Schwelle in einer bestimmten Richtung zur Aktivierung der Funktion führt. D.h. es wird erfasst, dass die Schwelle in einer bestimmten Richtung überquert wird. Nur dann wird die Funktion aktiviert. Weiterhin kann vorgesehen sein, dass nur die Überquerung der Schwelle an einer Stelle, die in einem vorbestimmten Abschnitt der Schwelle liegt, zu einer Aktivierung der Funktion führt. D.h. es wird erfasst, dass die Schwelle an einer Stelle, die in einem vorbestimmten Abschnitt liegt, überquert wird. Nur dann wird die Funktion aktiviert. Die Funktion kann der Stelle der Schwelle und/oder dem Abschnitt der Schwelle zugeordnet sein.

In einer vorteilhaften Weiterbildung umfasst das Verfahren das Anzeigen einer der Funktion zugeordneten Darstellung in der Nähe der Schwelle auf einer Anzeige oder angrenzend zur Schwelle auf einer Anzeige. Die Darstellung kann ein Piktogramm oder icon sein, das auf die zugeordnete Funktion hinweist, oder schlicht ein Schriftzug, der die Funktion benennt oder erläutert. Auf diese Weise wird dem Benutzer angezeigt, welche Funktion mit dem Überqueren der Schwelle aktiviert wird. Der Benutzer kann sich diese Funktion merken und anschließend ohne Blickkontakt mit dem berührungsempfindlichen Feld aktivieren. Das Anzeigen der Darstellung ist insbesondere vorteilhaft, wenn die Funktion frei wählbar ist.

In einer vorteilhaften Weiterbildung umfasst das Verfahren: Erfassen einer Berührung in einem an die Schwelle angrenzenden Bereich des Feldes; Ändern der zugeordneten Darstellung, insbesondere Hervorheben der zugeordneten Darstellung, in Antwort auf das Erfassen der Berührung in einem an die Schwelle angrenzenden Bereich des Feldes. Die Darstellung kann somit ihre Erscheinung verändern, beispielsweise größer werden, oder mit einem Schatten versehen werden, wenn eine Berührung, gegebenenfalls auch Fast-Berührung, eines Fingers mit dem berührungsempfindlichen Feld erfasst wird. Insbesondere umfasst das Verfahren: Ändern der zugeordneten Darstellung solange eine Berührung in einem an die Schwelle angrenzenden Bereich des Feldes erfasst wird. Das bedeutet, dass die Darstellung nur solange hervorgehoben wird, wie die Berührung im angrenzenden Bereich stattfindet. Mit anderen Worten: Solange der Finger eines Benutzers im Bereich das Feld berührt - von manchen auch "hovern" genannt -, wird die Darstellung hervorgehoben.

In einem bevorzugten Verfahren ist das Erfassen einer die Schwelle überquerenden Bewegung das Erfassen einer die Schwelle an einer ersten vorbestimmten Stelle überquerenden Bewegung eines Fingers auf dem berührungsempfindlichen Feld; und das Aktivieren der der Schwelle zugeordneten Funktion ist das Aktivieren einer ersten Funktion, in Antwort auf das Erfassen, dass die Schwelle an der ersten Stelle überquert wurde. Gleichzeitig umfasst das bevorzugte Verfahren auch die folgenden Schritte: Erfassen einer die Schwelle an einer zweiten vorbestimmten Stelle überquerenden Bewegung eines Fingers auf dem berührungsempfindlichen Feld; Aktivieren einer zweiten Funktion, in Antwort auf das Erfassen, dass die Schwelle an der zweiten Stelle überquert wurde. Mithilfe dieses Verfahrens wird dem Benutzer die Möglichkeit gegeben zwischen verschiedenen Funktionen zu wählen. Das Überqueren der Schwelle an der ersten Stelle aktiviert die erste Funktion, das Überqueren der Schwelle an der zweiten Stelle aktiviert die zweite Funktion. Die erste beziehungsweise zweite Stelle kann von einem ersten vorbestimmten beziehungsweise zweiten vorbestimmten Abschnitt der Schwelle umfasst sein, dessen jeweilige Überquerung die erste beziehungsweise zweite Funktion aktiviert. Anders ausgedrückt ist dem ersten Abschnitt der Schwelle die erste Funktion zugeordnet und dem zweiten Abschnitt der Schwelle die zweite Funktion. Dies ist eine andere Formulierung dafür, dass jeder Stelle der Schwelle in dem ersten Abschnitt die erste Funktion zugeordnet und jeder Stelle der Schwelle in dem zweiten Abschnitt die zweite

Funktion zugeordnet ist. Es aktiviert somit nicht nur die Überquerung an einer Stelle die zugeordnete Funktion, sondern die selbe Funktion kann von Überquerungen an mehreren Stellen aktiviert werden, nämlich von Überquerungen an allen im entsprechenden Abschnitt der Schwelle liegenden Stellen.

Zusätzlich umfasst das bevorzugte Verfahren das Anzeigen einer ersten der ersten Funktion zugeordneten Darstellung, die räumlich der ersten Stelle der Schwelle auf einer Anzeige zugeordnet ist und das Anzeigen einer zweiten der zweiten Funktion zugeordneten Darstellung, die räumlich der zweiten Stelle der Schwelle auf einer Anzeige zugeordnet ist. Die räumliche Zuordnung kann dadurch realisiert werden, dass die jeweilige Darstellung angrenzend an die jeweilige Stelle angeordnet ist oder zumindest näher an der jeweiligen Stelle angeordnet ist, als die andere Darstellung. Auf diese Weise wird dem Benutzer visuell dargestellt, welche Stelle der Schwelle er mit dem Finger überqueren muss, um die gewünschte Funktion zu aktivieren. Auf diese Weise kann der Benutzer intuitiv erfassen, welche Stelle der Schwelle welche Funktion aktiviert. Dies kann vor allem dann hilfreich sein, wenn der Benutzer festlegen kann, welche Funktionen bei der Überquerung bestimmter Stellen der Schwelle aktiviert werden sollen oder wenn die den Stellen zugeordneten Funktionen wechseln, beispielsweise abhängig von anderen Bedingungen.

Das bevorzugte Verfahren kann weiter umfassen: Erfassen, dass eine Berührung in einem an die erste Stelle der Schwelle angrenzenden Bereich des Feldes oder in einem an die zweite Stelle der Schwelle angrenzenden Bereich des Feldes ist; Ändern der der ersten Funktion zugeordneten Darstellung, in Antwort auf das Erfassen, dass die Berührung in einem an die erste Stelle der Schwelle angrenzenden Bereich des Feldes ist; Ändern der der zweiten Funktion zugeordneten Darstellung, in Antwort auf das Erfassen, dass die Berührung in einem an die zweite Stelle der Schwelle angrenzenden Bereich des Feldes ist. Die Darstellungen können somit bei einer Berührung oder Fast-Berührung im Bereich der jeweiligen Stelle oder dem jeweiligen Abschnitt der Schwelle verändert werden, beispielsweise vergrößert werden oder mit einem Schatten versehen werden. Dem Benutzer wird so die Gelegenheit geboten den Zusammenhang zwischen Berührung und Funktion kennen zu lernen.

Ebenso kann das bevorzugte Verfahren, weiter umfassen: Erfassen einer Berührung in einem an die erste Stelle der Schwelle angrenzenden Bereich des Feldes oder in einem an die zweite Stelle der Schwelle angrenzenden Bereich des Feldes; Ändern der ersten zugeordneten Darstellung, solange eine Berührung in dem an die erste Stelle der Schwelle angrenzenden Bereich des Feldes erfasst wird; Ändern der zweiten zugeordneten Darstellung, solange eine Berührung in dem an die zweite Stelle der Schwelle angrenzenden Bereich des Feldes erfasst wird. Dies hat die Wirkung, dass die entsprechende Darstellung hervorgehoben wird, solange der Finger des Benutzers den entsprechenden Bereich berührt. Wenn der Finger des Benutzers den entsprechenden Bereich nicht mehr berührt, wird die Darstellung nicht mehr hervorgehoben. Hierdurch wird dem Benutzer der Zusammenhang zwischen dem berührten Bereich und der zugehörigen Stelle der Schwelle und deren zugeordneter Funktion klar gezeigt.

In einer vorteilhaften Weiterbildung ist die Schwelle eine erste Schwelle. Weiterhin sind ein Bereich des Feldes auf einer Seite der Schwelle, der an die erste Stelle der Schwelle angrenzt, und ein Bereich des Feldes auf derselben Seite der Schwelle, der an die zweite Stelle angrenzt, durch eine weitere ertastbare Schwelle getrennt. Auf diese Weise wird dem Benutzer eine ertastbare Schwelle zwischen den Stellen der Schwelle geboten, deren Überquerung unterschiedliche Funktionen aktiviert. Der Benutzer kann damit durch Ertasten die Stelle der Schwelle finden, die der Funktion zugeordnet ist, die er aktivieren möchte. Auf diese Weise muss der Benutzer zum Finden der entsprechenden Stelle der Schwelle nicht den Blick auf das berührungsempfindliche Feld richten. Die angrenzenden Bereiche können eine Größe aufweisen, die nur einem kleinen Teil der Größe des berührungsempfindlichen Feldes entspricht. Jeder Bereich kann eine Seite mit einem jeweiligen Bereich der Schwelle gemeinsam haben, dessen Überquerung jeweils die zugeordnete Funktion aktiviert. Jeder Bereich kann insbesondere eine rechteckige Form aufweisen. Weiter vorteilhaft erstreckt sich die weitere Schwelle senkrecht zur ersten Schwelle und/oder grenzt an diese an.

Wenn den Funktionen zugeordnete Darstellungen angezeigt werden, können diese Darstellungen in ihrer Erscheinung verändert werden, wenn eine Berührung in dem an die jeweilige Stelle angrenzenden Bereich stattfindet. Berührt ein Benutzer zum Beispiel den an die erste Stelle angrenzenden Bereich kann die der ersten Funktion zugeordnete Darstellung verändert werden. Dies symbolisiert dem Benutzer noch einmal auf intuitive Weise, welche Funktion aktiviert werden würde, wenn er die Schwelle an der jeweiligen Stelle überqueren würde.

Vorteilhafter Weise ist das berührungsempfindliche Feld von einer berührungsempfindlichen Anzeige mit umfasst, wie beispielsweise einem berührungsempfindlichen Bildschirm, oft auch Touch Screen genannt. Die den Funktionen zugeordneten Darstellungen, wie auch das berührungsempfindliche Feld können somit von einem einzigen Touch Screen realisiert werden, so dass dem Benutzer eine einheitliche Erscheinung der Eingabevorrichtung geboten wird.

Eine erfindungsgemäße Vorrichtung zum Empfangen einer Eingabe auf einem berührungsempfindlichen Feld umfasst: Das berührungsempfindliche Feld, wobei das Feld dazu eingerichtet ist, den Ort einer Berührung des Feldes durch einen Finger eines Benutzers zu bestimmen, wobei das berührungsempfindliche Feld eine ertastbare Schwelle umfasst, wobei die Schwelle so angeordnet ist, dass auf ihren beiden Seiten je zumindest ein Bereich des berührungsempfindlichen Feldes liegt und elektronische Verarbeitungsmittel; wobei die Vorrichtung dazu eingerichtet ist, das erfindungsgemäße Verfahren auszuführen.

In einer vorteilhaften Weiterbildung der Vorrichtung ist die Schwelle eine erste Schwelle und die Vorrichtung umfasst ferner eine Anzeige und eine weitere ertastbare Schwelle. Ein Bereich des Feldes auf einer Seite der Schwelle, der an die erste Stelle der Schwelle angrenzt, und ein Bereich des Feldes auf derselben Seite der Schwelle, der an die zweite Stelle angrenzt, sind durch die weitere ertastbare Schwelle getrennt. Die Vorrichtung ist ferner dazu eingerichtet die vorteilhaften oder bevorzugten Weiterbildungen des erfindungsgemäßen Verfahrens auszuführen.

### KURZE BESCHREIBUNG DER ZEICHNUNG

Figur 1 zeigt ein Ausführungsbeispiel eines erfindungsgemäß eingerichteten Touch Screens.
Figuren 2 und 3 zeigen weitere Ausführungsbeispiele von erfindungsgemäß eingerichteten Touch Screens.
Figur 4 zeigt den schematischen Aufbau eines erfindungsgemäß eingerichteten Touch Screens in einer Schnittansicht.
Figur 5 zeigt einen erfindungsgemäß eingerichteten Touch Screen in verschiedenen Phasen während einer Aktivierung einer Funktion.

### DETAILLIERTE BESCHREIBUNG VON AUSFÜHRUNGSBEISPIELEN

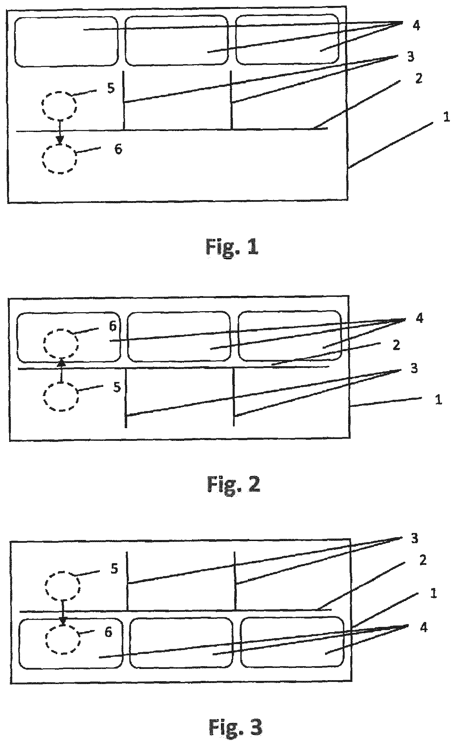

Figur 1 zeigt ein Ausführungsbeispiel eines erfindungsgemäß eingerichteten Touch Screens 1. Dieser umfasst eine ertastbare Schwelle 2, die eine haptische Barriere darstellt. Weiterhin umfasst der Touch Screen 1 die weiteren ertastbaren Schwellen 3, die Bereiche des Feldes 1 voneinander trennen und auch die Schwelle 2 in Abschnitte aufteilt. In Figur 1 werden zwei Schwellen 3 gezeigt, die dasselbe Bezugszeichen 3 tragen. Jedem einzelnen Abschnitt der Schwelle 2 ist eine andere Funktion zugeordnet, der wiederum eine der Darstellungen 4 zugeordnet ist. Jede Darstellung 4 ist räumlich dem entsprechenden Abschnitt der Schwelle 2 zugeordnet. In Figur 1 werden drei Darstellungen 4 gezeigt, die dasselbe Bezugszeichen 4 tragen. Der Benutzer erhält durch die Darstellungen 4 einen Hinweis, welche Funktion dem jeweiligen Abschnitt der Schwelle zugeordnet ist. Der Benutzer berührt den Touch Screen 1 zunächst mit seinem Finger, wodurch die Berührungs- bzw. Kontaktfläche 5 mit dem Touch Screen 1 geschaffen wird. Als nächstes bewegt der Benutzer seinen Finger wie durch den Pfeil angedeutet, so dass der Finger schließlich die Berührungs- bzw. Kontaktfläche 6 mit dem Touch Screen 1 hat. Mit dieser Bewegung überquert der Benutzer mit dem Finger die Schwelle 2 an einer Stelle, die von dem linken Abschnitt der Schwelle 2 umfasst ist. Damit wird die dieser Stelle bzw. diesem Abschnitt der Schwelle zugeordnete Funktion aktiviert. Überquert der Benutzer mit seinem Finger Stellen, die in anderen Abschnitten der Schwelle liegen werden den jeweiligen anderen Abschnitten zugeordnete Funktionen aktiviert.

Die ertastbaren Schwellen 3 ermöglichen es dem Benutzer ohne Blickkontakt den jeweiligen Bereich des Feldes 1 durch Ertasten beziehungsweise Erfühlen zu finden, dessen Abschnitt der Schwelle 2 die gewünschte Funktion zugeordnet ist. Der Bereich oberhalb der Schwelle wird auch als Hover-Fläche bezeichnet. Der Bereich unterhalb der Schwelle wird auch als Aktivierungsfläche bezeichnet. Der Benutzer kann die einzelnen Abschnitte bzw. Bereiche durch Ertasten abzählen und so den gewünschten Abschnitt bzw. Bereich identifizieren, der der gewünschten Funktion entspricht.

Die Figur 2 zeigt ein weiteres Ausführungsbeispiel eines erfindungsgemäß eingerichteten Touch Screens 1. Gleiche Bezugszeichen wie in Figur 1 bezeichnen Elemente mit gleicher Funktion. Gemäß dem Beispiel der Figur 2 führt eine Bewegung von unten nach oben zu der Aktivierung der Funktion. Hier führt also eine andere Ziehrichtung zur Aktivierung.

Die Figur 3 zeigt ein weiteres Ausführungsbeispiel eines erfindungsgemäß eingerichteten Touch Screens 1. Gleiche Bezugszeichen wie in Figur 1 bezeichnen Elemente mit gleicher Funktion. Hier führt eine Überquerung von oben nach unten zur Aktivierung der Funktion. Das Beispiel der Figur 3 bildet einen Kompromiss zwischen der Metapher des Nach-unten-Drückens eines physikalischen Knopfes und der Nicht-Verdeckung der Darstellungen 4 durch den interagierenden Finger.

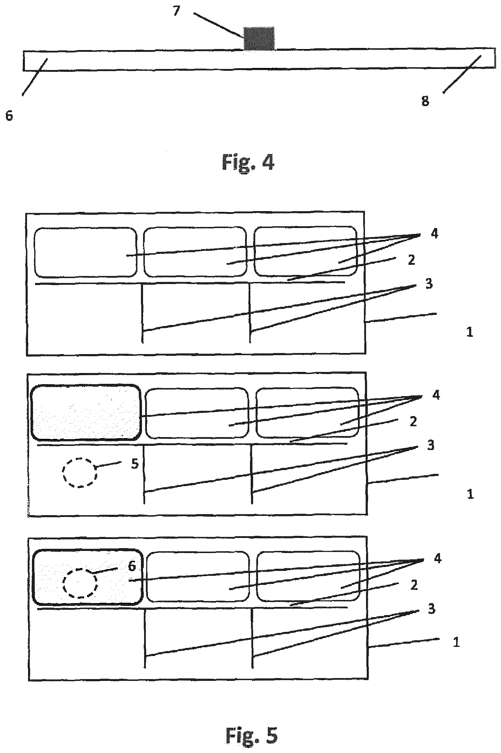

Die Figur 4 zeigt den schematischen Aufbau eines erfindungsgemäß eingerichteten Touch Screens in einer Schnittansicht. Mit dem Bezugszeichen 6 und dem umliegenden Bereich wird die Hover-Fläche des Touch Screens identifiziert. Mit dem Bezugszeichen 8 und dem umliegenden Bereich wird die Aktivierungsftäche des Touch Screens identifiziert. Das Bezugszeichen 7 zeigt eine physikalische Schwelle bzw. haptische Barriere in einer Schnittansicht.

Die Figur 5 zeigt einen erfindungsgemäßen Touch Screen 1 in verschiedenen Phasen während einer Aktivierung einer Funktion. Gleiche Bezugszeichen wie in Figur 2 bezeichnen Elemente mit der gleichen Funktion. Im obersten Bild findet noch keine Berührung des Touch Screens 1 statt. Im mittleren Bild berührt der Finger des Benutzers an der Kontaktfläche 5 den Touch Screen. Die zum entsprechenden Abschnitt der Schwelle 2 gehörende Darstellung 4 wird hervorgehoben, unter anderem durch eine dickere Umrandung und eine Vergrößerung. Im untersten Bild hat der Finger des Benutzers die Schwelle 2 überschritten und berührt nun den Touch Screen an der mit 8 bezeichneten Kontaktfläche. Die dem überquerten Abschnitt der Schwelle 2 zugeordnete Funktion wird aktiviert. Diese visuelle Funktionsvorschau erleichtert dem Benutzer die visuelle Exploration des Touch Screens und der Abschnitte der Schwelle 2 sowie den jeweiligen Abschnitten zugeordneten Funktionen.

## Patentansprüche

1. Verfahren zum Empfangen einer Eingabe auf einem berührungsempfindlichen Feld (1),
wobei das Feld (1) dazu eingerichtet ist, den Ort einer Berührung (5, 6) des Feldes (1) durch einen Finger eines Benutzers zu bestimmen,
wobei das berührungsempfindliche Feld (1) eine ertastbare Schwelle (2) umfasst,
wobei die Schwelle (2) so angeordnet ist, dass auf ihren beiden Seiten je zumindest ein Bereich des berührungsempfindlichen Feldes (1) liegt und wobei das Verfahren umfasst:
Erfassen einer die Schwelle (2) in einem ersten Abschnitt der Schwelle überquerenden Bewegung des Fingers des Benutzers auf dem berührungsempfindlichen Feld;
Aktivieren einer ersten Funktion in Antwort auf das Erfassen, dass die Schwelle (2) im ersten Abschnitt überquert wurde;
Erfassen einer die Schwelle (2) in einem zweiten Abschnitt der Schwelle überquerenden Bewegung (5, 6) eines Fingers auf dem berührungsempfindlichen Feld;
Aktivieren einer zweiten Funktion, in Antwort auf das Erfassen, dass die Schwelle (2) in dem zweiten Abschnitt überquert wurde.

2. Verfahren nach Anspruch 1, weiter umfassend:
Anzeigen einer der Funktion zugeordneten Darstellung (4) in der Nähe der Schwelle (2) auf einer Anzeige oder angrenzend zur Schwelle (2) auf einer Anzeige.

3. Verfahren nach Anspruch 2, weiter umfassend:
Erfassen einer Berührung (5) in einem an die Schwelle (2) angrenzenden Bereich des Feldes (1);
Ändern der zugeordneten Darstellung (4), insbesondere Hervorheben der zugeordneten Darstellung (4), in Antwort auf das Erfassen der Berührung in dem an die Schwelle (2) angrenzenden Bereich des Feldes (1); insbesondere Ändern der zugeordneten Darstellung (4) solange eine Berührung in einem an die Schwelle (2) angrenzenden Bereich des Feldes (1) erfasst wird.

4. Verfahren nach Anspruch 1 , weiter umfassend:
Anzeigen einer ersten der ersten Funktion zugeordneten Darstellung (4) auf einer Anzeige, die räumlich der ersten Stelle der Schwelle (2) zugeordnet ist;
Anzeigen einer zweiten der zweiten Funktion zugeordneten Darstellung (4) auf einer Anzeige, die räumlich der zweiten Stelle der Schwelle (2) zugeordnet ist.

5. Verfahren nach Anspruch 4, weiter umfassend:
Erfassen einer Berührung in einem an die erste Stelle der Schwelle (2) angrenzenden Bereich des Feldes (1) oder in einem an die zweite Stelle der Schwelle (2) angrenzenden Bereich des Feldes (1);
Ändern der ersten Darstellung (4), in Antwort auf das Erfassen, dass die Berührung in einem an die erste Stelle der Schwelle (2) angrenzenden Bereich des Feldes (1) ist;
Ändern der zweiten Darstellung (4), in Antwort auf das Erfassen, dass die Berührung in einem an die zweite Stelle der Schwelle (2) angrenzenden Bereich des Feldes (1) ist.

6. Verfahren nach Anspruch 4, weiter umfassend:
Erfassen einer Berührung in einem an die erste Stelle der Schwelle (2) angrenzenden Bereich des Feldes (1) oder in einem an die zweite Stelle der Schwelle (2) angrenzenden Bereich des Feldes (1);
Ändern der ersten Darstellung (4), solange eine Berührung in dem an die erste Stelle der Schwelle (2) angrenzenden Bereich des Feldes (1) erfasst wird;
Ändern der zweiten Darstellung (4), solange eine Berührung in dem an die zweite Stelle der Schwelle (2) angrenzenden Bereich des Feldes (1) erfasst wird.

7. Verfahren nach einem der Ansprüche 1 oder 4, wobei die Schwelle eine erste Schwelle (2) ist; und wobei ein Bereich des Feldes (1) auf einer Seite der Schwelle (2), der an die erste Stelle der Schwelle (2) angrenzt, und ein Bereich des Feldes (1) auf derselben Seite der Schwelle (2), der an die zweite Stelle angrenzt, durch eine weitere ertastbare Schwelle (3) getrennt sind.

8. Verfahren nach einem der Ansprüche 5 oder 6, wobei die Schwelle eine erste Schwelle (2) ist; und wobei der an die erste Stelle der Schwelle (2) angrenzende Bereich des Feldes und der an die zweite Stelle der Schwelle (2) angrenzende Bereich des Feldes auf derselben Seite der Schwelle liegen und durch eine weitere ertastbare Schwelle (3) getrennt sind.

9. Verfahren nach einem der Ansprüche 7 oder 8, wobei die weitere Schwelle (3) sich senkrecht zur ersten Schwelle (2) erstreckt und/oder an diese angrenzt.

10. Verfahren nach einem der Ansprüche 1 bis 9, wobei das berührungsempfindliche Feld (1) von einer berührungsempfindlichen Anzeige umfasst ist.

11. Vorrichtung zum Empfangen einer Eingabe auf einem berührungsempfindlichen Feld (1), umfassend:
das berührungsempfindliche Feld (1), wobei das Feld (1) dazu eingerichtet ist, den Ort einer Berührung (5, 6) des Feldes durch einen Finger eines Benutzers zu bestimmen,
wobei das berührungsempfindliche Feld (1) eine ertastbare Schwelle (2) umfasst,
wobei die Schwelle (2) so angeordnet ist, dass auf ihren beiden Seiten je zumindest ein Bereich des berührungsempfindlichen Feldes (1) liegt und elektronische Verarbeitungsmittel;
wobei die Vorrichtung dazu eingerichtet ist, ein Verfahren nach Anspruch 1 auszuführen.

12. Vorrichtung nach Anspruch 11, ferner umfassend eine Anzeige, wobei die Vorrichtung dazu eingerichtet ist, ein Verfahren nach einem der Ansprüche 2 bis 7 auszuführen.

13. Vorrichtung nach Anspruch 12, wobei die Schwelle eine erste Schwelle ist; ferner umfassend:
eine weitere ertastbare Schwelle (3);
wobei ein Bereich des Feldes (1) auf einer Seite der Schwelle (2), der an die erste Stelle der Schwelle (2) angrenzt, und ein Bereich des Feldes auf derselben Seite der Schwelle (2), der an die zweite Stelle angrenzt, durch die weitere ertastbare Schwelle (3) getrennt sind;
wobei die Vorrichtung ferner dazu eingerichtet ist, ein Verfahren nach einem der Ansprüche 8 bis 10 auszuführen.

## Claims

1. Method for receiving an input on a touch-sensitive panel (1),
wherein the panel (1) is designed to determine the location of a touch (5, 6) of the panel (1) by the finger of a user,
wherein the touch-sensitive panel (1) comprises a tactile threshold (2),
wherein the threshold (2) is arranged such that at least one area of the touch-sensitive panel (1) lies on each of both its sides and
wherein the method comprises:
detecting a movement of the finger of the user on the touch-sensitive panel that crosses the threshold (2) in a first portion of the threshold;
activating a first function in response to the detection that the threshold (2) has been crossed in the first portion;
detecting a movement (5, 6) of a finger on the touch-sensitive panel that crosses the threshold (2) in a second portion of the threshold;
activating a second function in response to the detection that the threshold (2) has been crossed in the second portion.

2. Method according to Claim 1, further comprising:
displaying a representation (4) assigned to the function in the vicinity of the threshold (2) on a display or adjacent to the threshold (2) on a display.

3. Method according to Claim 2, further comprising:
detecting a touch (5) in an area of the panel (1) adjacent to the threshold (2);
changing the assigned representation (4), in particular highlighting the assigned representation (4), in response to the detection of the touch in the area of the panel (1) adjacent to the threshold (2);
in particular changing the assigned representation (4) until a touch is detected in the area of the panel (1) adjacent to the threshold (2).

4. Method according to Claim 1, further comprising:
displaying a first representation (4), assigned to the first function, on a display that is spatially assigned to the first place on the threshold (2);
displaying a second representation (4), assigned to the second function, on a display that is spatially assigned to the second place on the threshold (2).

5. Method according to Claim 4, further comprising:
detecting a touch in an area of the panel (1) adjacent to the first place on the threshold (2) or in an area of the panel (1) adjacent to the second place on the threshold (2);
changing the first representation (4), in response to the detection that the touch is in an area of the panel (1) adjacent to the first place on the threshold (2) ;
changing the second representation (4) in response to the detection that the touch is in an area of the panel (1) adjacent to the second place on the threshold (2).

6. Method according to Claim 4, further comprising:
detecting a touch in an area of the panel (1) adjacent to the first place on the threshold (2) or in an area of the panel (1) adjacent to the second place on the threshold (2);
changing the first representation (4) as long as a touch is detected in the area of the panel (1) adjacent to the first place on the threshold (2);
changing the second representation (4) as long as a touch is detected in the area of the panel (1) adjacent to the second place on the threshold (2).

7. Method according to one of Claims 1 or 4, wherein the threshold is a first threshold (2); and wherein an area of the panel (1) on one side of the threshold (2) that is adjacent to the first place on the threshold (2) and an area of the panel (1) on the same side of the threshold (2) that is adjacent to the second place are separated by a further tactile threshold (3).

8. Method according to either of Claims 5 and 6, wherein the threshold is a first threshold (2); and wherein the area of the panel adjacent to the first place on the threshold (2) and the area of the panel adjacent to the second place on the threshold (2) lie on the same side of the threshold and are separated by a further tactile threshold (3).

9. Method according to either of Claims 7 and 8, wherein the further threshold (3) extends perpendicularly to the first threshold (2) and/or is adjacent to it.

10. Method according to one of Claims 1 to 9, wherein the touch-sensitive panel (1) is comprised by a touch-sensitive display.

11. Device for receiving an input on a touch-sensitive panel (1), comprising:
the touch-sensitive panel (1), wherein the panel (1) is designed to determine the location of a touch (5, 6) of the panel by a finger of the user,
wherein the touch-sensitive panel (1) comprises a tactile threshold (2),
wherein the threshold (2) is arranged such that at least one area of the touch-sensitive panel (1) lies on each of both its sides, and
electronic processing means:
wherein the device is designed to perform the method according to Claim 1.

12. Device according to Claim 11, further comprising a display, wherein the device is designed to perform the method according to one of Claims 2 to 7.

13. Device according to Claim 12, wherein the threshold has a first threshold; further comprising:
a further tactile threshold (3);
wherein an area of the panel (1) on one side of the threshold (2) that is adjacent to the first place on the threshold (2) and an area of the panel on the same side of the threshold (2) that is adjacent to the second place are separated by the further tactile threshold (3);
wherein the device is also designed to perform the method according to one of Claims 8 to 10.

## Revendications

1. Procédé permettant de recevoir une entrée sur un champ tactile (1),
le champ (1) étant aménagé pour déterminer l'endroit d'un contact (5, 6) avec le champ (1) par un doigt d'un utilisateur,
le champ tactile (1) comprenant un seuil (2) détectable au toucher,
le seuil (2) étant disposé de telle sorte que sur ses deux côtés se trouve respectivement au moins une zone du champ tactile (1), et
le procédé comprenant les étapes consistant à :
détecter un mouvement du doigt de l'utilisateur sur le champ tactile qui franchit le seuil (2) dans une première partie du seuil ;
activer une première fonction en réponse à la détection que le seuil (2) a été franchi dans la première partie ;
détecter un mouvement (5, 6) d'un doigt sur le champ tactile qui franchit le seuil (2) dans une deuxième partie du seuil ;
activer une deuxième fonction en réponse à la détection que le seuil (2) a été franchi dans la deuxième partie.

2. Procédé selon la revendication 1, comprenant en outre l'étape consistant à :
afficher une représentation (4) associée à la fonction à proximité du seuil (2) sur un affichage ou de manière adjacente au seuil (2) sur un affichage.

3. Procédé selon la revendication 2, comprenant en outre les étapes consistant à :
détecter un contact (5) dans une zone du champ (1) adjacente au seuil (2) ;
modifier la représentation associée (4), en particulier mettre en évidence la représentation associée (4) en réponse à la détection du contact dans la zone du champ (1) adjacente au seuil (2) ;
en particulier modifier la représentation associée (4) tant qu'un contact est détecté dans une zone du champ (1) adjacente au seuil (2).

4. Procédé selon la revendication 1, comprenant en outre les étapes consistant à :
afficher une première représentation (4) associée à la première fonction sur un affichage qui est associé spatialement au premier endroit du seuil (2) ;
afficher une deuxième représentation (4) associée à la deuxième fonction sur un affichage qui est associé spatialement au deuxième endroit du seuil (2).

5. Procédé selon la revendication 4, comprenant en outre les étapes consistant à :
détecter un contact dans une zone du champ (1) adjacente au premier endroit du seuil (2) ou dans une zone du champ (1) adjacente au deuxième endroit du seuil (2) ;
modifier la première représentation (4) en réponse à la détection que le contact se trouve dans une zone du champ (1) adjacente au premier endroit du seuil (2) ;
modifier la deuxième représentation (4) en réponse à la détection que le contact se trouve dans une zone du champ (1) adjacente au deuxième endroit du seuil (2) .

6. Procédé selon la revendication 4, comprenant en outre les étapes consistant à :
détecter un contact dans une zone du champ (1) adjacente au premier endroit du seuil (2) ou dans une zone du champ (1) adjacente au deuxième endroit du seuil (2) ;
modifier la première représentation (4) tant qu'un contact est détecté dans la zone du champ (1) adjacente au premier endroit du seuil (2) ;
modifier la deuxième représentation (4) tant qu'un contact est détecté dans la zone du champ (1) adjacente au deuxième endroit du seuil (2).

7. Procédé selon l'une quelconque des revendications 1 ou 4, dans lequel le seuil est un premier seuil (2) ; et
dans lequel une zone du champ (1) sur un côté du seuil (2), qui est adjacente au premier endroit du seuil (2), et une zone du champ (1) sur le même côté du seuil (2), qui est adjacente au deuxième endroit, sont séparées par un autre seuil (3) détectable au toucher.

8. Procédé selon l'une quelconque des revendications 5 ou 6, dans lequel le seuil est un premier seuil (2) ; et
dans lequel, la zone du champ adjacente au premier endroit du seuil (2) et la zone du champ adjacente au deuxième endroit du seuil (2) se trouvent du même côté du seuil et sont séparées par un autre seuil (3) détectable au toucher.

9. Procédé selon l'une quelconque des revendications 7 ou 8, dans lequel l'autre seuil (3) s'étend perpendiculairement au premier seuil (2) et/ou est adjacent à celui-ci.

10. Procédé selon l'une quelconque des revendications 1 à 9, dans lequel le champ tactile (1) est entouré d'un affichage tactile.

11. Dispositif permettant de recevoir une entrée sur un champ tactile (1), comprenant :
le champ tactile (1), le champ (1) étant aménagé pour déterminer l'endroit d'un contact (5, 6) avec le champ par un doigt d'un utilisateur,
le champ tactile (1) comprenant un seuil (2) détectable au toucher,
le seuil (2) étant disposé de telle sorte qu'au moins une zone du champ tactile (1) et des moyens de traitement électroniques se trouvent sur ses deux côtés respectivement ;
le dispositif étant aménagé pour effectuer un procédé selon la revendication 1.

12. Dispositif selon la revendication 11, comprenant en outre un affichage, le dispositif étant aménagé pour effectuer un procédé selon l'une quelconque des revendications 2 à 7.

13. Dispositif selon la revendication 12, dans lequel le seuil est un premier seuil ; comprenant en outre :
un autre seuil (3) détectable au toucher ;
dans lequel une zone du champ (1) sur un côté du seuil (2), qui est adjacente au premier endroit du seuil (2), et une zone du champ sur le même côté du seuil (2), qui est adjacente au deuxième endroit, sont séparées par un autre seuil (3) détectable au toucher ;
le dispositif étant en outre aménagé pour effectuer un procédé selon l'une quelconque des revendications précédentes 8 à 10.
